Europäisches Patentamt

European Patent Office

Office européen des brevets

(19)

(11) **EP 0 777 131 A1**

(12) **EUROPÄISCHE PATENTANMELDUNG**

(43) Veröffentlichungstag:
**04.06.1997 Patentblatt 1997/23**

(51) Int Cl.6: **G01S 13/04**, G01S 13/40

(21) Anmeldenummer: **96810722.7**

(22) Anmeldetag: **29.10.1996**

(84) Benannte Vertragsstaaten:
**AT BE CH DE FR IT LI NL**

(30) Priorität: **06.12.1995 CH 3445/95**

(71) Anmelder: **GEBERIT TECHNIK AG**
**CH-8645 Jona (CH)**

(72) Erfinder:
• **Heierli, Jakob**
**9411 Reute (CH)**

• **Mauerhofer, Alex**
**7324 Vilters (CH)**

(74) Vertreter: **Schick, Carl et al**
**Isler & Pedrazzini AG**
**Patentanwälte**
**Postfach 6940**
**8023 Zürich (CH)**

(54) **Überwachungsvorrichtung mit einer Radarsonde**

(57) Die Überwachungsvorrichtung ist mit einer Radarsonde versehen und ausgestaltet, um die Präsenz von Menschen zu detektieren. Die Radarsonde umfasst eine Steuereinheit (8) und einen zwischen einer Oszillator-Schaltung (1) und einer Sendestufe (2) eingefügten Abzweiger (4) sowie eine Überlagerungsschaltung (5), in der einem über eine Empfangsstufe (6) empfangenen Echosignal ein vom Radarsender abgezweigtes Signal überlagert wird. Die Radarsonde ist für eine Arbeitsweise als Interferenzradar ausgestaltet, indem im Sende-Empfangs-Pfad zwischen dem Abzweiger (4) und der Überlagerungsschaltung (5) eine Verzögerungsschaltung (25) eingefügt ist, um die Laufzeit des Radarsignals in bezug auf das abgezweigte Signal zu verlängern.

Fig. 1

**Beschreibung**

Die vorliegende Erfindung betrifft eine Überwachungsvorrichtung mit einer Radarsonde gemäss dem Oberbegriff des Patentanspruchs 1.

Aus der DE-A1-32 10 985 ist beispielsweise eine berührungslose elektronische Steuerung für eine sanitäre Armatur bekannt, die mit Radarwellen arbeitet und sich den Dopplereffekt zunutze macht, derart, dass sie Bewegungen von Personen auch richtungserkennend überwachen kann. Bei hohen Anforderungen an den Spülkomfort und die zuverlässige Arbeitsweise von Sanitärarmaturen vermögen oft diese Radarsonden nicht zu befriedigen, weil sie nicht in der Lage sind, ein eindeutiges Anwesenheitssignal für einen Benutzer der betreffenden Sanitärarmatur zu erzeugen. Nachteilig ist manchmal zudem die Tatsache, dass solche Radarsonden in technisch aufwendiger Weise an die Transmissions- und Reflexionseigenschaften der betreffenden Sanitärarmatur angepasst werden müssen, was in vielen Fällen die diesbezüglichen Kenntnisse und Fähigkeiten der installierenden Sanitärmonteure übersteigt.

Aus der US-5,268,692 ist beispielsweise ein mit einem FM/CW-Radar arbeitenden Nahdistanzentfernungsmesser für Überwachungszwecke in Fahrzeugen bekannt. Bei derartigen Radarsystemen ergibt sich oft der Nachteil, dass sie mit relativ grossen Frequenzänderungen arbeiten müssen, die unter Umständen die zulässige Bandbreite der Radarabstrahlung überschreiten.

Es ist daher Aufgabe der vorliegenden Erfindung, eine Überwachungsvorrichtung mit einer Radarsonde zu schaffen, die die zulässige Bandbreite der Radarabstrahlung nicht überschreitet.

Erfindungsgemäss wird diese Aufgabe durch eine Überwachungsvorrichtung mit einer Radarsonde gemäss dem kennzeichnenden Teil des Patentanspruchs 1 gelöst.

Die erfindungsgemässe Überwachungsvorrichtung erweist sich als vorteilhaft nicht nur im Hinblick auf die zulässige Bandbreite, sondern auch weil sie im Gegensatz zu den FM/CW-Radarsystemen besonders kostengünstig ist.

Ein zusätzlicher Vorteil der erfindungsgemässen Überwachungsvorrichtung besteht darin, dass sie beispielsweise in Sanitäranwendungen einen hohen Spülkomfort gewährleistet und zugleich ohne jegliche Anpassung problemlos an allen handelsüblichen Sanitärarmaturen installiert werden kann.

Vorteilhafte Ausführungen der Erfindung sind in den abhängigen Ansprüchen angegeben.

Die Erfindung wird nun nachfolgend beispielsweise anhand einer Zeichnung näher erläutert. Es zeigt:

Figur 1     ein Blockschaltbild einer Überwachungsvorrichtung mit einer Radarsonde nach der Erfindung,

Figur 2     ein Zeigerdiagramm zur Erläuterung der Arbeitsweise einer bevorzugten Ausführung der erfindungsgemässen Überwachungsvorrichtung,

Figur 3     ein Diagramm zur Erläuterung der Arbeitsweise einer weiteren Ausführung der Erfindung mit Standzeichenunterdrückung, und

Figur 4     ein Diagramm zur Darstellung der Frequenz mit der sich jeweils eine vorbestimmte Amplitude des Interferenzsignals wiederholt.

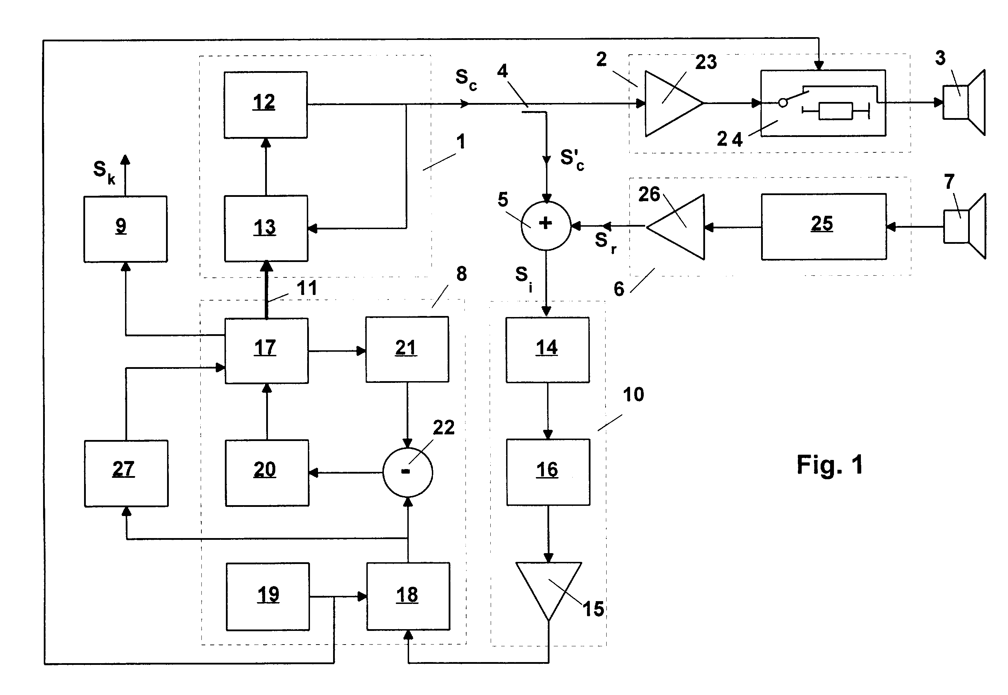

Die in Figur 1 dargestellte Radarsonde weist eine Oszillator-Schaltung 1 auf, deren Ausgang einerseits über eine Sendestufe 2 mit einer Sendeantenne 3 und andererseits über einen Abzweiger 4 mit dem ersten Eingang einer Überlagerungsschaltung 5 verbunden ist. Der Empfangsteil der Radarsonde umfasst eine an den zweiten Eingang der Schaltung 5 angeschlossene Empfangsstufe 6 und eine mit dieser verbundene Empfangsantenne 7.

Die Überwachungsvorrichtung umfasst zusätzlich eine Steuereinheit 8 und eine Auswerteschaltung 9, die ähnlich wie bei der Patentanmeldung CH-03 784/94-3 funktionieren kann. Zwischen dem Ausgang der Schaltung 5 und dem Eingang der Steuereinheit 8 ist eine Demodulatorschaltung 10 eingefügt. Die Steuereinheit 8 ist über einen Signalbus 11 mit der Schaltung 1 verbunden.

Die Schaltung 1 umfasst einen ein Signal Sc liefernden spannungsabhängigen Oszillator 12, der von einem Frequenzsynthetisierer 13, auch Frequenzsynthesizer genannt, jeweils auf eine schrittweise oder iterativ veränderbare Frequenz fm eingestellt wird. Die Demodulatorschaltung 10 besteht vorzugsweise aus einem Demodulator 14 und einem nachgeschalteten Verstärker 15. Vorzugsweise ist zwischen dem Demodulator 14 und dem Verstärker 15 ein Hochpassfilter 16 eingefügt, der beispielsweise durch einen Trennkondensator gebildet sein kann. Die Steuereinheit 8 ist mit einem Mikroprozessor 17 versehen, an den die Auswerteschaltung 9 und der Signalbus 11 angeschlossen sind.

In einer ersten bevorzugten Ausführung der Erfindung umfasst die Steuereinheit 8 zudem einen Synchrongleichrichter 18, der eingangsseitig einerseits mit dem Ausgang der Demodulatorschaltung 10 und andererseits mit dem Ausgang eines Niederfrequenzoszillators 19 verbunden ist. Der Ausgang des Synchrongleichrichters 18 ist über einen Komparator 20 an einen Eingang des Mikroprozessors 17 angeschlossen.

In einer zweiten Ausführung der Erfindung weist die Steuereinheit 8 einen an den Mikroprozessor 17 angeschlossenen Digital/Analog-Wandler 21 und einen zwischen den Synchrongleichrichter 18 und dem Komparator 20 eingefügten Subtrahierer 22 auf, welche speziell vorgesehen sind, um eine Standzeichenunterdrückung durchführen zu können. Für gewisse Anwendungen, insbesondere ohne Standzeichenunterdrükkung, kann jedoch eine einfache Verbindung zwischen dem Ausgang des Synchrongleichrichters 18 und dem Eingang des Komparators 20 vorhanden sein.

Die Sendestufe 2 umfasst vorzugsweise einen Verstärker 23, der auch ein Isolator sein könnte, und einen nachgeschalteten Hilfsmodulator 24, der auch eine einfache Umschaltfunktion haben kann, um entweder den Sendepfad aufrechtzuerhalten oder das Signal auf eine Lastimpedanz zu führen. Der Hilfsmodulator 24 kann beispielsweise ein PIN-Dioden-Modulator sein. Anstelle des Hilfsmodulators 24 könnte auch das Signal des NF-Oszillators 19 über einen Schalter direkt die Speisung des Verstärkers 23 ein- und ausschalten. Die Empfangsstufe 6 weist beispielsweise die Reihenschaltung einer Verzögerungsschaltung 25 und eines Verstärkers 26 auf. Die Verzögerungsschaltung befindet sich grundsätzlich im Sende-Empfangspfad; sie kann somit gegebenenfalls auch dem Modulator 24 vor- oder nachgeschaltet sein oder sich teilweise in der Sendestufe 2 und teilweise in der Empfangsstufe 6 befinden.

Die Radarsonde nach Figur 1 funktioniert folgendermassen: Der Radarsender erzeugt das Signal

$$Sc = a \sin wt$$

Zur Überlagerungsschaltung 5 gelangt ein Empfangssignal Sr mit einer Zeitverzögerung Td + 2r/c, worin Td die durch die Verzögerungsschaltung 25 bewirkte Zeitverzögerung, 2r die Distanz zum Ziel und zurück und c die Lichtgeschwindigkeit ist. Für das Signal Sr gilt daher

$$Sr = b \sin w(t - Td - 2r/c)$$

Da die sinusförmigen Signale Sc und Sr an den zwei Eingängen der Überlagerungsschaltung 5 jeweils dieselbe Frequenz haben, ergibt ihre Überlagerung ebenfalls einen sinusförmigen zeitlichen Verlauf, wobei sich im zeitlichen Mittel an einigen Stellen die Signalamplituden addieren, während sich an anderen Stellen gegenseitig teilweise löschen, so dass normalerweise eine an sich irrelevante Gleichspannungskomponente vorhanden ist.

Am Ausgang des Demodulators 14 wird daher eine Sequenz von Amplituden gewonnen, deren Periodizität $\Delta fm$ ein Mass für die Zieldistanz r darstellt. Die Periodizität des Interferenzsignals, das heisst die Frequenz $\Delta fm$, mit der sich eine vorbestimmte Amplitude wiederholt ergibt sich aus

$$\Delta wt - 2\pi \cdot n = \Delta w(t - Td - 2r/c)$$

worin n eine ganze Zahl ist, unter Berücksichtigung, dass

$$\Delta w = 2\pi \cdot \Delta fm$$

ist. Daraus ergibt sich für n = 1 die Radarformel, wie folgt

$$r = c(1 - \Delta fm \cdot Td)/(2 \cdot \Delta fm)$$

oder für Td = 10 ns:

$$r[cm] = 150 \cdot ((100/\Delta fm[MHz])-1)$$

Bemerkenswert bei dieser Formel des Nahdistanzradars ist die Tatsache, dass die Distanzmessung unabhängig von der absoluten Radarfrequenz ist; es kommt einzig und allein auf die Änderung $\Delta fm$ der Trägerfrequenz fm an. Durch die Verzögerungszeit Td kann eine vorbestimmte Radarbandbreite an den gewünschten Zieldistanzbereich angepasst werden. Bei einer Verzögerungszeit Td von beispielsweise 10 ns und einer gemessenen Periodizität der Interferenzamplitude von $\Delta fm = 66,66$ MHz ergibt sich aus der Radarformel eine Distanz r = 75 cm.

Ein Vorteil der erfindungsgemässe Überwachungsvorrichtung besteht daher darin, dass bei kurzen Zieldistanzen die zur Periodizität der Interferenzamplitude gehörenden Frequenzänderungen keine so grossen Werte annehmen, die zu einem Überschreiten der zulässigen Bandbreite der Radarabstrahlung führen würden. Wenn nämlich für einen vorgegebenen Wert von Td eine Frequenzänderung $\Delta fm$ notwendig ist, um eine Distanz r zu ermitteln, für die bei Td = 0 eine Frequenzänderung $\Delta fm'$ notwendig wäre, gilt die Beziehung

$$\Delta fm = \Delta fm'/(1 + \Delta fm' \cdot Td)$$

oder

$$\Delta fm = \Delta fm'/2 \text{ für } \Delta fm' \cdot Td = 1.$$

Dies zeigt, dass bei Verwendung einer Verzögerungsschaltung die erforderliche Bandbreite etwa auf die Hälfte reduziert wird.

Gemäss einer ersten Ausführung der Erfindung ohne die Elemente 24, 16, 18, 19, 21 und 22 ist der Ausgang des Verstärkers 15 direkt mit dem Eingang des Komparators 20 verbunden.

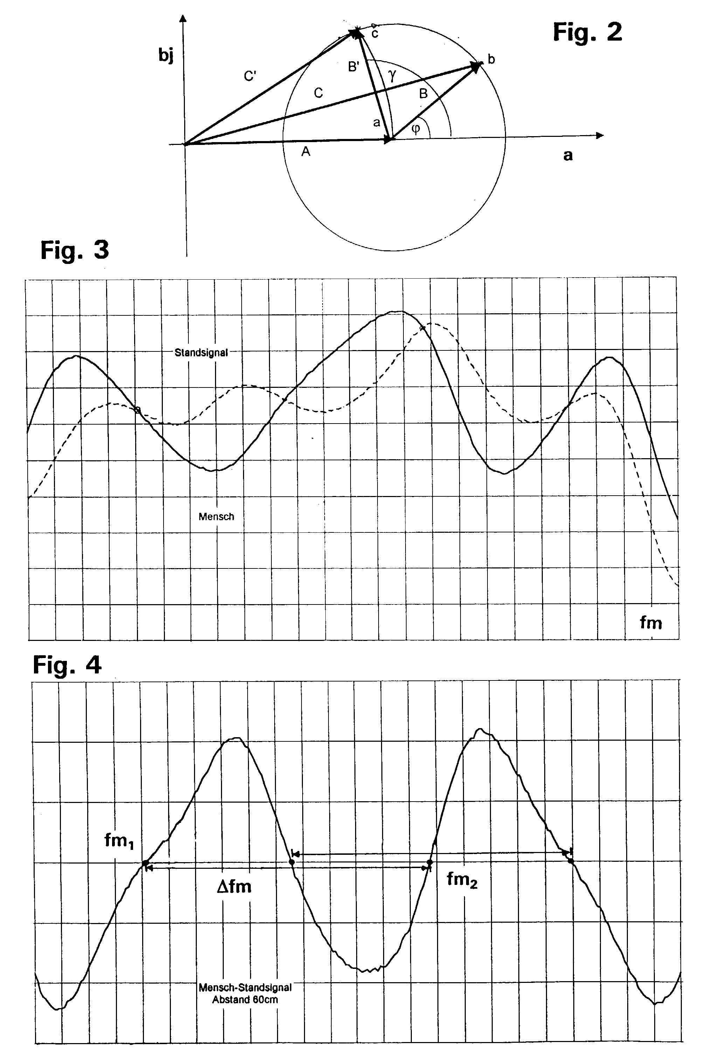

Die Aufgabe des Mikroprozessors besteht bei allen Ausführungen darin, die Frequenzdifferenz $\Delta fm$ zu bestimmen, mit der sich eine vorbestimmte Amplitude wiederholt. Zu diesem Zweck ist der mit dem Radarsender 1 verbundene Mikroprozessor 17 derart programmiert, dass die Trägerfrequenz fm ausgehend von einem vorbestimmten Anfangswert fm1 (Fig. 4) schrittweise oder iterativ geändert wird, bis sie einen Wert fm2 erreicht, bei dem sich zumindest angenähert eine Phasenverschiebung des Interferenzsignals von $2\pi$ bezüglich der Phase des Anfangswerts fm1 ergibt. In diesem Moment ist $\Delta$fm = fm2 - fm1, und die Radarformel kann angewendet werden, um die Distanz r zu ermitteln, was ohne weiteres möglich ist, weil die Konstante c und der feste Parameter Td bekannt sind. Dies alles wird automatisch vom Mikroprozessor 17 gesteuert, der jeweils ein geeignetes Code-Signal dem Frequenzsynthesizer 13 liefert, um den Oszillator 12 mit der gewünschten Frequenz fm1 usw. zu steuern, und zwar beispielsweise mit einer Sweep-Steuerung in quarzgenauen 500 kHz-Schritten, wodurch zugleich eine sonst zusätzlich notwendige Frequenzmesseinrichtung eingespart wird.

Zu diesem Zweck empfängt der Mikroprozessor nach jedem Verfahrensschritt eine Information darüber, ob der entsprechende Amplitudenwert grösser oder kleiner als ein vorbestimmtes Referenzsignal ist. Diese Information wird vom Komparator 20 geliefert. Die Auswerteschaltung 9 bekommt schliesslich vom Mikroprozessor 17 eine Information über die Distanz r zwischen der Radarsonde und einem Ziel.

Die technische Realisierung des Interferenz-Nahdistanz-Radars ist daher relativ einfach, weil es rein statisch arbeitet. Der Frequenz-Synthesizer ist in weiten Grenzen durch die Software des Mikroprozessors 17 programmierbar und kann vorzugsweise folgende technische Daten aufweisen:

| | |
|---|---|
| Radarfrequenz: | ca. 1 bis 40 GHz |
| Bandbreite: | 10 MHz bis 3GHz |
| Schrittweite: | 10·n kHz |

mit z. B. 240 Schritten und n = 50 (Distanzauflösung +/- 1 cm). Dabei ist zu bemerken, dass in der Praxis nur mit einer der offiziell zugelassenen Frequenzen (2,4 GHz; 5,8 GHz; 9,6 GHz; 10,5 GHz; 13,7 GHz; 24,1 GHz; 34,7 GHz) gearbeitet werden darf.

Das erfindungsgemässe Iterations-Verfahren mit einem Frequenzsynthesizer bietet grosse Flexibilität bei der Bestimmung der Periodenweite des Interferenzsignals, insbesondere durch eine lineare Sweep-Steuerung über alle 240 Stufen von unten nach oben oder umgekehrt über die gesamte Bandbreite. Für die Programmierung des Synthesizers und die Messung des gegebenenfalls über den Hilfsmodulator 24 modulierten Interferenzsignals werden insgesamt maximal 1 ms/Stufe und damit eine gesamte Sweep-Dauer von maximal 240 ms benötigt.

Da mit dem Synthesizer jede der 240 einstellbaren Frequenzen innerhalb von maximal 1 ms quarzgenau angefahren und ausgemessen werden kann, sind zudem einfache und schnelle Eingrenzungsverfahren zur Bestimmung der Periodenweite des Interferenzsignals realisierbar.

Gemäss der zweiten Ausführung der Erfindung, bei welcher auch die Elemente 19, 18, 16 und 24 vorhanden sind, ist der Ausgang des Synchrongleichrichters 18 direkt mit dem Eingang des Komparators 20 verbunden. Diese Ausführung ist vorgesehen, um im Hinblick auf die oben erwähnte Gleichspannungskomponente die Messgenauigkeit zu erhöhen.

Er ergibt sich nämlich die Aufgabe, ein sehr kleines Radarsignal, das einem im Vergleich dazu sehr grossen Referenzsignal überlagert ist, auswerten zu müssen. Dies ist erfahrungsgemäss in der Praxis mit einigen Schwierigkeiten verbunden, die mit der erfindungsgemässen zweiten Ausführung in vorzüglicher Weise umgangen werden.

Gemäss dieser zweiten Ausführung liefert der Niederfrequenz-Oszillator 19 ein Modulationssignal mit einer Frequenz von beispielsweise 10 kHz, indem für beliebige Radarfrequenzen eine einfache Gleichrichtung der Amplituden des Interferenzsignals im Synchrongleichrichter 18 durchgeführt wird. Dadurch wird die Periodizität des Interferenzsignals nicht beeinträchtigt, weil sich der gleichgerichtete Wert auch in diesem Fall periodisch mit der Frequenz $\Delta$fm ändert.

Im Zeigerdiagramm nach Figur 2 stellt der Vektor A das durch den Modulator 24 noch nicht modulierte Referenzsignal S'c und der Vektor B das durch den Modulator 24 bereits modulierte Empfangssignal Sr mit einem von der Objektweite abhängigen Phasenwinkel $\varphi$ gegen den Vektor A dar, woraus sich durch Überlagerung der Vektor C als Interferenzsignal Si ergibt. Bei einem Ein- und Ausschalten des Umschalters 24, was einer nahezu 100%-Rechteckmodulation des Vektors B entspricht, springt der Interferenzvektor C zwischen den Punkten b und a im Takt der Modulationsfrequenz des Niederfrequenzoszillators 19 hin und her. Seine Länge variiert somit zwischen der Länge des Vektors C und derjenigen des Vektors A. Bei einem Phasenwinkel $\varphi = \gamma$, bei dem die Längen der Vektoren A und C' gleich sind, verschwindet die Modulation beim Ein- und Ausschalten. Ist der Phasenwinkel $\varphi$ kleiner oder grösser als $\gamma$, so erscheint die Modulation auf dem Interferenzvektor wieder, allerdings ändert die Modulationsphase an diesem Nullpunkt um $2\pi$. Die Phasenänderung um 180° um den Nullpunkt der Modulationsspannung wird vom Synchrongleichrichter 18 bei der Signalauswertung ausgenützt, die zur Bestimmung der Periodenweite $\Delta$fm des Interferenzsignals durch die erfindungsgemässe phasensynchrone Gleichrichtung dient.

Das durch Überlagerung von Radar- und Referenzsignal gewonnene Interferenzsignal enthält somit nebst der vom Referenzsignal stammenden Gleichspannungskomponente auch eine vom Radarecho herrührende, rechteckmodulierte Wechselspannungskomponente. Durch das einfache in der Demodulatorschaltung 10 enthaltene Hochpassfilter 16 wird dann das modulierte Radarecho zur Weiterverarbeitung von der Gleichspannungskomponente getrennt. Die Nullstellen des Interferenzsignals (Fig. 4) werden nach der phasensynchronen Gleichrichtung vom Komparator 20 ermittelt.

Zur Erzeugung des Interferenzsignals Si wird gemäss dieser zweiten Ausführung das durch einen grossen Dynamikbereich charakterisierte Radarsignal einem konstanten, vom Sendesignal abgeleiteten Referenzsignal S'c überlagert und anschliessend gleichgerichtet. Die auszuwertende Interferenzsignalamplitude beschreibt über den Messfrequenzbereich eine annähernd sinusförmige Kurve, welche einem konstanten Amplitudenwert überlagert ist. Dieser konstante Amplitudenwert entspricht der Referenzsignalamplitude S'c und wird zweckmässigerweise zur exakten Bestimmung der Periodenweite des Interferenzsignals als Nulllinie benutzt, weil der Schnittwinkel des Interferenzsignals mit dieser Nullinie am grössten ist. In diesem Fall kann daher der Komparator ein sogenannter Null-Detektor sein.

Gemäss der dritten Ausführung der Erfindung ist eine Standzeichenkompensation vorgesehen, die mit Hilfe des Digital/Analog-Wandlers 21 und des Subtrahierers 22 realisiert wird.

Durch Reflexion an den im Erfassungsbereich des Radars permanent vorhandenen Gegenständen, insbesondere also auch an einem Urinalbecken, entsteht das sogenannte Standzeichenecho, welches dem Zielecho überlagert ist. Da das Interferenzradarverfahren nicht mehrzielfähig ist, können sich durch dieses Standzeichenecho unzulässige Messfehler ergeben.

Um diese Messfehler zu vermeiden, wird das erfindungsgemässe Verfahren zur Standzeichenunterdrückung angewendet: Durch eine Referenzmessung ohne Zielecho wird das Standzeichenecho über den gesamten Messfrequenzbreich ausgemesssen und im Mikroprozessor 17 abgespeichert. Bei jeder Zieldistanzmessung wird anschliessend das für die betreffende Messfrequenz gespeicherte Standzeichenecho "wegkompensiert". Dieses Verfahren setzt jedoch voraus, dass Standzeichen- und Zielecho erheblich kleiner als das Referenzsignal S'c sind.

Der Standzeichenunterdrückung kommt auch die Modulation zugute, die für die phasensynchrone Gleichrichtung verwendet wird. Diese Modulation besteht, wie oben erläutert, darin, dass das Ausgangssignal Sc des VCO-Oszillators 12 des Radarsenders 1 vor der Abstrahlung über die Sendeantenne mit dem erwähnten Modulationssignal von beispielsweise 10 kHz 100%-amplitudenmoduliert wird, wobei im Referenzsignalpfad dagegen keine Amplitudenmodulation vorgenommen wird. Die Kompensation des Standzeichenechos kann dann in einer sehr einfachen Art und Weise in die Schaltung dieses phasensynchronen Gleichrichters mit einbezogen werden, und zwar ebenfalls durch den Komparator 20, dessen logisches Ausgangssignal dem Mikroprozessor 17 die direkte Information liefert, ob das Zielecho bei der betreffenden Messfrequenz durch die Interferenz abgeschwächt oder verstärkt worden ist, nachdem bei jeder Zieldistanzmessung das für die betreffende Messfrequenz gespeicherte Standzeichenecho durch Subtraktion "wegkompensiert" wurde.

Das Standzeichenecho kann aufgenommen werden, wenn sich keine Fremdobjekte im zu überwachenden Raum befinden. Für diese Aufnahme ist ein Analog/Digital-Wandler 27 zwischen dem Ausgang des Phasensynchrongleichrichters 18 und einem Eingang des Mikroprozessors 17 eingefügt. Das Nahdistanzradar erfasst das Standzeichenecho, wie wenn es ein Zielecho wäre, und der Mikroprozessor 17 ermittelt die in Fig. 3 punktiert dargestellten Interferenzamplitudenwerte. In Fig. 3 sind mit einer vollen Linie die Interferenzamplitudenwerte dargestellt, die sich bei zusätzlicher Anwesenheit eines Menschen ergeben. Fig. 4 zeigt das resultierende Ergebnis nach der Anwendung des erfindungsgemässen Verfahrens zur Standzeichenunterdrückung.

Die Differenz $\Delta$fm = fm1 - fm2 der Frequenzen fm1 und fm2 von zwei Signalen, die im Bereich von zwei nacheinanderkommenden Nullpunkten ansteigende Amplituden aufweisen, ergibt die gesuchte Periodizität $\Delta$fm des Interferenzsignals, das heisst den Wert, der in die Radarformel einzusetzen ist, um die Distanz r zu ermitteln.

Bei einer anderen Variante ohne die Elemente 21 und 22 kann anstelle des Komparators 20 ein A/D-Wandler eingesetzt werden, wobei dann der Mikroprozessor von den Interferenzamplitudenwerten des Menschen softwaremässig die entsprechenden Werte des Standzeichenechos subtrahiert.

Die Auswerteschaltung 9 oder gegebenenfalls der Mikroprozessor 17 kann ausgestaltet sein, um mindestens ein Kriteriumsignal $S_k$ zu liefern, wenn der Wert der momentanen Distanz r zwischen einer sich im Überwachungsbereich aufhaltenden Person und der Radarsonde kleiner als ein vorbestimmter Referenzwert $d_r$ ist; und die Überwachungsvorrichtung kann zusätzlich eine Steuereinheit umfassen, die ausgestaltet ist, um ein Nutzsignal in Abhängigkeit von diesem Kriteriumsignal $S_k$ zu erzeugen.

Diese Steuereinheit kann auch ausgestaltet sein, um beim Vorhandensein des Kriteriumsignals $S_k$ die Steuerung der Radarsonde von einem passiven Überwachungszustand mit einer ersten Wiederholungsfrequenz $f_{w1}$ auf einen aktiven Überwachungszustand mit einer zweiten Wiederholungsfrequenz $f_{w2}$ umzuschalten, die höher als die erste ist, oder bei welchem die Radarsonde dauernd eingeschaltet ist, wobei vorzugsweise die erste Wiederholungsfrequenz $f_{w1}$ im Bereich von 0,1 Hz bis 100 Hz und die zweite Wiederholungsfrequenz $f_{w2}$ im Bereich von 10 Hz bis zur Dauereinschaltung der Radarsonde liegt. Vorzugsweise sind die Steuereinheit und die Überwachungsvorrichtung über elektrische Kabel miteinander verbunden, wobei die Steuereinheit die Überwachungsvorrichtung derart steuert, dass sie nur während Zeitspannen von kurzer Dauer im Vergleich mit der Periode der Wiederholungsfrequenz $f_{w1}$; $f_{w2}$ bespielsweise von einer Batterie gespeist wird.

Die Überwachungsvorrichtung kann auch ausgestaltet sein, um mehrere Kriteriumsignale auszuwerten, die Informationen über Ziele in verschiedenen Entfernungen und/oder über auftretende Radialzielgeschwindigkeiten und/oder über die Bewegungsrichtung bei einer erfassten Radialzielgeschwindigkeit beinhalten.

Die Antennen 3, 7 können Hornantennen oder auf einer Print-Platte angeordnete Planar-Antennen sein.

Die erfindungsgemässe Vorrichtung kann in vorzüglicher Weise nicht nur bei Sanitärarmaturen, sondern beispielsweise auch bei Türöffnern oder anderen Anlagen mit Lebewesendetektion im Nahbereich eingesetzt werden.

**Patentansprüche**

1. Überwachungsvorrichtung mit einer Radarsonde, welche auf die Präsenz von Objekten anspricht, wobei die Radarsonde eine Steuereinheit (8) und einen zwischen einer Oszillator-Schaltung (1) und einer Sendestufe (2) eingefügten Abzweiger (4) sowie eine Überlagerungsschaltung (5) umfasst, in der einem über eine Empfangsstufe (6) empfangenen Echosignal ein vom Radarsender abgezweigtes Signal überlagert wird, dadurch gekennzeichnet, dass die Radarsonde für eine Arbeitsweise als Interferenzradar ausgestaltet ist und dass im Sende-Empfangs-Pfad zwischen dem Abzweiger (4) und der Überlagerungsschaltung (5) eine Verzögerungsschaltung (25) eingefügt ist, um die Laufzeit des Radarsignals in bezug auf das abgezweigte Signal zu verlängern.

2. Vorrichtung nach Anspruch 1, dadurch gekennzeichnet, dass die Verzögerungsschaltung (25) eine Verzögerungszeit zwischen 2 und 40 ns aufweist.

3. Vorrichtung nach Anspruch 1 oder 2, dadurch gekennzeichnet, dass der das Radarinterferenzsignal (Si) liefernde Ausgang der Überlagerungsschaltung (5) über eine Demodulatorschaltung (10) mit der Steuereinheit (8) zur Steuerung der Oszillator-Schaltung (1) verbunden ist.

4. Vorrichtung nach einem der Ansprüche 1 bis 3, dadurch gekennzeichnet, dass die Verzögerungsschaltung (25) in die zwischen einer Empfangsantenne (7) und der Überlagerungsschaltung (5) eingefügte Empfangsstufe (6) integriert ist.

5. Vorrichtung nach Anspruch 3 oder 4, dadurch gekennzeichnet, dass die Steuereinheit (8) einen Gleichrichter (18) umfasst, der eingangsseitig an den Ausgang der Demodulatorschaltung (10) und ausgangsseitig über einen Komparator (20) an einen die Oszillator-Schaltung (1) steuernden Mikroprozessor (17) angeschlossen ist.

6. Vorrichtung nach Anspruch 5, dadurch gekennzeichnet, dass die Demodulatorschaltung (10) einen Demodulator (14) und ein nachgeschaltetes Hochpassfilter (16) umfasst, und dass die Steuereinheit (8) einen Niederfrequenz-Oszillator (19) aufweist, an dessen Ausgang ein Eingang des Gleichrichters (18) und ein Eingang der einen Hilfsmodulator umfassenden Sendestufe (2) angeschlossen sind.

7. Vorrichtung nach Anspruch 5 oder 6, dadurch gekennzeichnet, dass zur Standzeichenunterdrükkung die Steuereinheit (8) einen zwischen dem Gleichrichter (18) und dem Komparator (20) eingefügten Subtrahierer (22) umfasst, dessen zweiter Eingang über einen Digital/Analog-Wandler (21) an den Mikroprozessor (17) angeschlossen ist.

8. Vorrichtung nach Anspruch 7, dadurch gekennzeichnet, dass zur Speicherung von Standzeichen zwischen dem Ausgang des Gleichrichters (18) und einem weiteren Eingang des Mikroprozessors (17) ein Analog/Digital-Wandler (27) eingefügt ist.

9. Vorrichtung nach einem der Ansprüche 1 bis 8, dadurch gekennzeichnet, dass die Oszillator-Schaltung (1) einen durch die Steuereinheit (8) auf eine veränderbare Frequenz (fm) einstellbaren Frequenzsynthetisierer (13) aufweist, an dessen Ausgang ein spannungsabhängiger Oszillator (12) angeschlossen ist.

10. Vorrichtung nach Anspruch 9, dadurch gekennzeichnet, dass der Frequenzsynthetisierer (13) ausgestaltet ist, um bei einer der offiziell zugelassenen Frequenzen mit einer Bandbreite von 120 MHz und einer Schrittweite von 50·n kHz zu arbeiten, wobei n eine ganze Zahl zwischen 4 und 20 ist.

Fig. 1

EP 0 777 131 A1

**Fig. 2**

**bj**

C'
C
B'
B
γ
a
A
φ
a
b

**Fig. 3**

Standsignal

Mensch

fm

**Fig. 4**

fm₁

Δfm

fm₂

Mensch-Standsignal
Abstand 60cm

Europäisches Patentamt

## EUROPÄISCHER RECHERCHENBERICHT

Nummer der Anmeldung

EP 96 81 0722

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 107 684 A (WATSON JR CHARLES A) 15.August 1978 * das ganze Dokument * ----- | 1 | G01S13/04 G01S13/40 |

RECHERCHIERTE SACHGEBIETE (Int.Cl.6)

G01S

Der vorliegende Recherchenbericht wurde für alle Patentansprüche erstellt

| Recherchenort | Abschlußdatum der Recherche | Prüfer |
|---|---|---|
| DEN HAAG | 14.März 1997 | Zaccà, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

......................................................................
& : Mitglied der gleichen Patentfamilie, übereinstimmendes Dokument

EPO FORM 1503 03.82 (P04C03)